# EUROPÄISCHE PATENTANMELDUNG

(11) **EP 2 602 925 A1**
(43) Veröffentlichungstag der Anmeldung: **12.06.2013**
(21) Anmeldenummer: 11192287.8
(22) Anmeldetag: 07.12.2011
(51) Int. Cl.: H02M 5/458

(54) **Frequenzumrichter mit Potentialtrennung im Gleichspannungszwischenkreis zur Regelung eines Asynchronmotors**

(71) Anmelder: KD Elektroniksysteme GmbH, 39261 Zerbst (DE)
(72) Erfinder: Gehlert, Uwe, 07407 Rudolstadt (DE); Kleinodt, Ralf, 39261 Zerbst (DE)
(74) Vertreter: Engel, Christoph Klaus

(57) **Zusammenfassung**

Die Erfindung betrifft einen Frequenzumrichter zur Regelung eines Asynchronmotors (7). Der Frequenzumrichter umfasst einen eingangsseitigen ungesteuerten Brückengleichrichter (2), einen Gleichspannungszwischenkreis und einem ausgangsseitigen Wechselrichter (5). Erfindungsgemäß umfasst der Gleichspannungszwischenkreis weiterhin einen DC/DC-Steller (3) mit galvanischer Trennung, so dass eine Potentialtrennung zwischen Brückengleichrichter (2) und Wechselrichter (5) hergestellt ist.

## Beschreibung

Die Erfindung betrifft einen Frequenzumrichter gemäß dem Oberbegriff des Anspruchs 1, der für die Regelung eines Asynchronmotors dient. Ein gattungsgemäßer Frequenzumrichter umfasst einen ungesteuerten Brückengleichrichter, einen Gleichstrom- oder Gleichspannungszwischenkreis und einen Wechselrichter. Damit kann die Netzspannung ein- oder mehrphasig in eine Wechselspannung mit veränderlicher Amplitude und/oder Frequenz gewandelt werden. Die Erfindung betrifft weiterhin eine Asynchronmotoreinheit mit einem solchen Frequenzumrichter.

Aus der DE 40 26 955 C2 sind verschiedene Umrichtertopologien für umkehrbaren Leistungsfluss bekannt. Dabei handelt es sich um alle möglichen Arten von Energiewandlern, wie DC/DC-Wandler, AC/DC-Wandler und AC/AC-Wandler. Quelle und Verbraucher werden über Halbleiterschalter mit einem Zwischenkreis mit einem Speicherelement verbunden. Es werden bestimmte Ansteuerprinzipien und Schaltfrequenzperioden benutzt, um Quelle und Verbraucher wechselseitig mit dem Speicherelement zu verbinden. Das Speicherelement kann ein HF-Transformator sein, der Quelle und Verbraucher galvanisch trennt.

Frequenzumrichter ermöglichen u.a. ein stufenloses Einstellen der Drehzahl eines Asynchronmotors zwischen Null und der Nenndrehzahl bei annähernd konstantem Drehmoment. Auch die Ansteuerung anderer Motoren ist prinzipiell möglich. Frequenzumrichter werden beispielsweise im Bereich der Klimatechnik zur Regelung des Luft- und Volumenstromes von Pumpen, Lüftern und Kompressoren, in der Hebe- und Fördertechnik und im Bereich der Servoantriebe bevorzugt verwendet.

Die Frequenzumrichter können durch Parametrierung dem jeweils zu regelnden Motor angepasst werden. Beispielsweise ist aus der DE 100 12 799 C2 ein drehzahlsteuerbarer Drehstrommotor bekannt, der zum Betrieb an einem passenden Frequenzumrichter vorgesehen ist. Der Drehstrommotor weist einen Speicherbaustein als "elektronisches Typenschild" auf, in welchem die für den Umrichter relevanten Motordaten abgelegt sind. Der Umrichter kann den Motortyp sowie dessen Daten bei der Inbetriebnahme automatisch einlesen, sodass die Regelparameter geeignet ausgewählt werden können.

Aus der DE 10 2009 007 522 B4 ist eine Steuerschaltung für einen Drehstromasynchronmotor bekannt, bei der zur Reduzierung hoher Anlaufströme jeder der drei Netzphasen über einen Phasentransistor mit mindestens einer von drei Statorwicklungen des Drehstromasynchronmotors und über je einen Freilauftransistor mit einem Freilaufsammelpotential verbunden ist. Die Statorwicklungen sind weiterhin mit der Anode je einer Freilaufdiode verbunden. Die Kathoden der Freilaufdioden sind mit dem Freilaufsammelpotential verbunden. Die Phasentransistoren können beliebig ein- und ausgeschaltet werden, ohne dass sie durch eine Induktionsspannung zerstört werden, die über der Spannungsfestigkeit der Phasentransistoren liegt.

Die DD 203 442 beschreibt ein Stromrichtersystem zur Steuerung mehrerer, voneinander abhängiger schneller elektrischer Stellmotore. Das Stromrichtersystem umfasst einen Frequenzumrichter mit einem Gleichrichter, einen Gleichspannungszwischenkreis, einen Wechselrichter und einen oder mehrere Mittelfrequenztransformatoren. Der oder die Mittelfrequenztransformatoren sind nach dem Wechselrichter im Frequenzumrichter angeordnet. In Abhängigkeit von der auszugebenden Frequenz (0 bis Nennfrequenz der Motoren) müssen diese Transformatoren eine erhebliche Baugröße aufweisen, was sie teuer macht und die Einsatzfelder beschränkt. Weiterhin ist eine fremdgeführte Umkehrschaltung zwischen Transformator und Motor vorgesehen. Aufgrund der steilen Flanken der Wechselspannung am Ausgang des Wechselrichters und der parasitären Kapazitäten der Motoranordnung entstehen an den Motorlagern, deren Außenringe über das Gehäuse mit dem Erdpotential leitend verbunden sind, Ableitströme, die mittelfristig zur Zerstörung der Lager führen können. Um dies zu verhindern, werden teilweise isoliert ausgebildete und damit teure Lager in den Motoren verwendet. Wegen der hohen Frequenz der parasitären Ableitströme ist die Isolationswirkung aber oftmals nicht ausreichend. Auf die Statorwicklung wirkende erdpotentialbezogene Spannungsspitzen aufgrund der hohen Zwischenkreis-Spannung können den Motor ebenso schädigen.

In der DE 10 2005 016 962 A1 wird zum Schutz der Lager der Drehstrommaschine vorgeschlagen, die drei Stromkreise des Stators gegeneinander isoliert mit je einem separaten Anschlusspunkt des Frequenzumrichters zu verbinden und den Frequenzumrichter mit einem mittelpunktgeerdeten Gleichstromzwischenkreis auszubilden. Durch das Zusammenspiel der symmetrischen Streukapazitäten und der erdsymmetrischen Spannung soll zu jedem Zeitpunkt je Stromkreis zwischen den zugehörigen Anschlusspunkten eine - bezogen auf das Erdpotential - symmetrische elektrische Spannung vorhanden sein. Dadurch sollen Lagerströme wegen kapazitiv auf den Rotor eingekoppelter Spannungen verhindert werden.

Zum "sanften Betrieb" von Motoren sind Frequenzumrichter mit einem integrierten, allpolig wirksamen Sinusfilter bekannt. Diese Frequenzumrichter stellen eine sinusförmige Ausgangsspannung zur Verfügung, so dass keine Lagerströme im Motor aufgrund steiler Spannungsflanken auftreten. Die Frequenzumrichter und die integrierten Sinusfilter müssen durch die Auswahl der Betriebsmodi an den jeweiligen Motor angepasst werden. Dabei wird jeweils die Ansteuerung der Leistungshalbleiter entsprechend des Anwendungsfalles programmgesteuert modifiziert. Solche allpolig wirkenden Sinusfilter haben einen hohen schaltungstechnischen Aufwand und sind für den einfachen Anschluss unterschiedlicher Motoren nicht geeignet.

Viele der aus dem Stand der Technik bekannten Frequenzumrichter müssen durch Parametrierung für den jeweiligen Anwendungsfall speziell angepasst werden. Dies geschieht heutzutage meist durch eine Tastatur-/Anzeigeeinheit, die sich am Umrichter befindet und die Navigation in einer Menüstruktur zulässt. Besonders komplexe Umrichter ermöglichen die Programmierung in einer eigenen Programmiersprache oder durch ein entsprechendes graphisches Programm am PC. Fertige Datensätze werden dann über eine Schnittstelle in den Umrichter geladen. Ebenfalls ist es üblich, den fertigen Parametersatz auf einem Speichermedium (z.B. USB, Chip- und Flashkarten) zu speichern, dass in eine entsprechende Schnittstelle des Frequenzumrichters gesteckt und von diesem eingelesen wird. Einige Modelle können selbst die Antriebseigenschaften messen und ihre eigenen Regelparameter im Rahmen der Inbetriebnahme selbständig einstellen (vgl. dazu Wikipedia: Frequenzumrichter).

Der Erfindung liegt ausgehend vom Stand der Technik die Aufgabe zugrunde, einen Frequenzumrichter zur Ansteuerung eines Asynchronmotors bereitzustellen, der ohne spezielle Anpassung oder Programmierung mit allen leistungsmäßig passenden Typen von Asynchronmotoren betrieben werden kann, ohne dass die Wicklungen der Motoren aufgrund von erdpotentialbezogenen Spannungsspitzen Schaden erleiden oder Lagerschäden aufgrund von relevanten Ableitströmen auftreten. Der Frequenzumrichter soll dabei kompakt aufgebaut und preiswert herstellbar sein.

Die Lösung der Aufgabenstellung gelingt mit einem Frequenzumrichter mit den Merkmalen des Anspruchs 1.

Ein erfindungsgemäßer Frequenzumrichter dient zum geregelten Zweiquadrantenbetrieb eines Asynchronmotors, d.h. der Betrieb in beiden Drehrichtungen ist möglich, und umfasst in zunächst bekannter Weise einen eingangsseitigen ungesteuerten Brückengleichrichter zum Gleichrichten der Netzspannung, einen Gleichstromzwischenkreis und einen ausgangsseitigen Wechselrichter zur Bereitstellung einer frequenzvariablen und ggf. amplitudenvariablen Ausgangsspannung. Der Zwischenkreis umfasst einen Kondensator zur Glättung der Gleichspannung und eine Induktivität zur Entstörung. Als Wechselrichter kommen gesteuerte Brücken mit Leistungshalbleiterschaltern, wie IGBT, MOSFET oder Schaltthyristoren, sogenannte Pulswechselrichter, zum Einsatz.

Soll auch ein Bremsbetrieb des Motors ermöglicht werden, ist eine bekannte Brems-Chopper-Schaltung im Zwischenkreis integriert. Ein Verbraucher der Brems-Chopper-Schaltung kann dabei auch außerhalb des Frequenzumrichters angeordnet sein.

Erfindungsgemäß ist im Gleichspannungszwischenkreis ein DC/DC-Steller mit galvanischer Trennung angeordnet. Durch die galvanische Trennung im Zwischenkreis steht eine erdpotentialfreie Ausgangsspannung zur Verfügung; dadurch werden insbesondere erdpotentialbezogene Spannungsspitzen auf die Motorwicklung verhindert.

Die Vorteile der Erfindung sind insbesondere darin zu sehen, dass der kompakte preiswerte Frequenzumrichter ohne spezielle Anpassung an alle Typen von Asynchronmotoren der entsprechenden Leistungsklasse angeschlossen werden können und dennoch eine Beschädigung der Wicklungen und ein erhöhter Verschleiß der Lager des Motors vermieden wird. In vorteilhafter Weise kann der Schaltungsaufwand für einen integrierten Sinusfilter erheblich verringert werden, da steile Spannungsflanken gegen Erdpotential nicht mehr auftreten.

Bevorzugte Ausgestaltungsvarianten der Erfindung sind in den Unteransprüchen angegeben.

In einer besonders bevorzugten Ausführungsform der Erfindung ist der DC/DC-Steller als Gegentaktwandler ausgeführt. Gegentaktwandler (auch: push-pull-converter) sind aus dem Bereich der Schaltnetzteile bekannt.

In einer ebenfalls bevorzugten Ausführungsform ist der DC/DC-Steller ein Gegentaktwandler mit einer Halbbrückenansteuerung und Mittelpunktschaltung. Der Vorteil der Halbbrückenansteuerung ist darin zu sehen, dass der Transformator nur für die halbe Zwischenkreisspannung ausgelegt werden muss. Übertragungsverhältnis des Transformators und das Tastverhältnis der Halbbrückensteuerung sind vorzugsweise so zu wählen, dass eine nahezu konstante Ausgangsspannung am Asynchronmotor anliegt.

Die Ansteuerung des Wechselrichters erfolgt in bekannter Weise durch entsprechende Pulstaktung der Halbleiterschalter mittels eines Microcontrollers, so dass eine Ausgangsspannung bereitgestellt wird, die den Anforderungen des Motors entspricht.

Für die Ansteuerung eines Asynchronmotors ist eine sinuskommutierte Pulsweitenmodulation üblich. Hier werden immer genau drei der sechs Halbleiterschalter eingeschaltet.

Aufgrund der Potentialtrennung im Zwischenkreis kann ein nachgeschalteter Sinusfilter und/oder du/dt-Filter vereinfacht ausgelegt und direkt in den Frequenzumrichter integriert werden, so dass hier ein enormes Einsparpotential vorhanden ist.

Der geerdete Asynchronmotor wird in bekannter Weise mittels eines motorseitigen EMV-Filters an den Ausgang des Frequenzumrichters angeschlossen. Der motorseitige Filter kann weiterhin Filterkomponenten für die Sinusfilterung und du/dt-Filterung umfassen.

Eine bevorzugte Ausführungsform der Erfindung wird nachfolgend anhand der Zeichnung näher erläutert. Es zeigt:

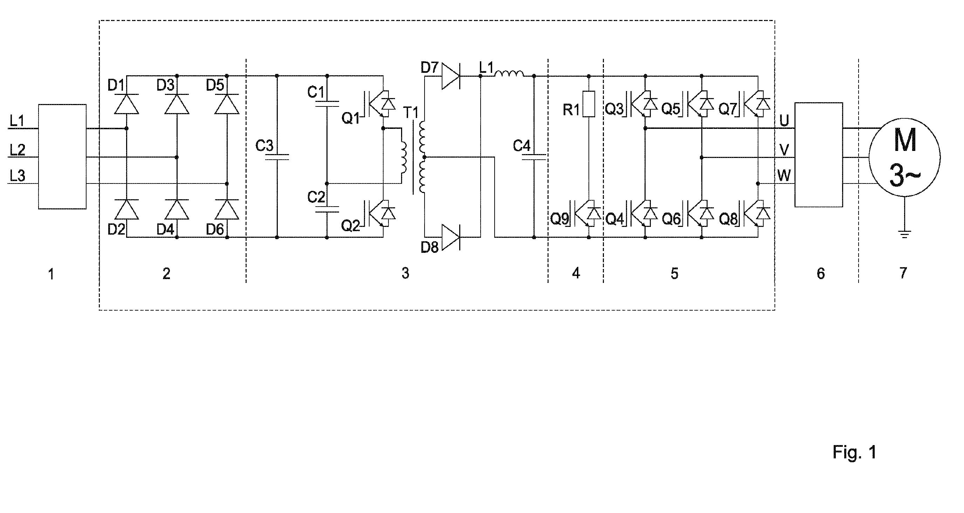

- Fig. 1:: eine Schaltungsanordnung einer erfindungsgemäßen Asynchronmotoreinheit mit einem Frequenzumrichter und mit einem Asynchronmotor.

In Fig. 1 ist eine Schaltungsanordnung einer erfindungsgemäßen Asynchronmotoreinheit mit einem erfindungsgemäßen Frequenzumrichter dargestellt. Der dargestellte Frequenzumrichter ist für einen Leistungsbereich bis ca. 3kW konzipiert.

Der Frequenzumrichter umfasst einen eingangsseitigen EMV-Filter 1, der die drei Phasen L1, L2, L3 einer dreiphasigen Netzspannung einem Gleichrichter 2 zuführt. Der Gleichrichter 2 ist ein ungesteuerter 6-Puls-Brückengleichrichter, der in bekannter Weise aus sechs Netzdioden D1 bis D6 gebildet ist.

Im Gleichspannungszwischenkreis ist ein DC/DC-Steller 3 mit Potentialtrennung angeordnet. Der DC/DC-Steller 3 ist in der dargestellten Ausführungsform als Gegentaktwandler mit Halbbrückenansteuerung mittels Halbleiterschaltern Q1, Q2 (z.B. IGBT-Schalttransistoren mit Freilaufdiode 1200V/40A) und Mittelpunktschaltung am Ausgang (Gleichrichterdioden D7, D8) ausgeführt. Vier Kondensatoren C1 bis C4 dienen der Glättung der Gleichspannung im Zwischenkreis.

Weiterhin ist ein Hochfrequenz-Transformator T1 im Gleichrichterzwischenkreis 3 vorgesehen, der beispielsweise ein Übersetzungsverhältnis Wₚ:Wₛ₁:Wₛ₂ von 24:28:28 hat. Da der Transformator mit Hochfrequenz betrieben wird, kann ein kleiner Trafokern (z.B. ETD 59) verwendet werden. Eine Primärwicklung des Transformators T1 wird mit der gleichgerichteten, hochfrequenten, von den Halbleiterschaltern Q1, Q2 geschalteten Netzspannung versorgt. Eine Sekundärwicklung des Transformators T1 liefert die induzierte Spannung in den galvanisch getrennten Schaltungsteil. Dazu wird ein Potenzial durch einen Mittelabgriff der Sekundärwicklung gebildet, während das andere Potenzial von den beiden Wicklungsenden gebildet wird, die über zwei Gleichrichterdioden D7, D8 an den Eingang einer Induktivität L1 gelegt sind. Die Induktivität L1 und eine nachfolgend Kapazität C4 dienen der Entstörung und Spannungsglättung des Zwischenkreises 3.

Eine optionale Brems-Chopper-Schaltung 4 dient dem Abbau von in den Zwischenkreis durch Motorbremsung eingespeister Energie in bekannter Weise. Die Brems-Chopper-Schaltung 4 umfasst dabei zumindest einen Schalter Q9, mit dem ein Verbraucher R1 dem Zwischenkreis zugeschaltet werden kann, um überschüssige Energie im Bremsbetrieb des Motors abzubauen. Der Verbraucher R1 kann dabei innerhalb oder außerhalb des Frequenzumrichter-Gehäuses angeordnet sein.

Ein von der Sekundärwicklung des Transformators T1 versorgter dreiphasiger Wechselrichter 5 stellt in ebenfalls bekannter Weise eine Ausgangsspannung mit variabler Frequenz und Amplitude zur Verfügung. Dies geschieht durch eine entsprechende Ansteuerung (Pulsung) von sechs Halbleiterschaltern Q3 bis Q8.

Schließlich ist an die dreiphasige Ausgangsspannung des Wechselrichters 5 ein motorseitiger EMV-Filter 6 angeschaltet, der zwischen Frequenzumrichter und einem dreiphasigen Asynchronmotor 7 geschaltet ist. Der Asynchronmotor 7 kann beispielsweise eine Leistung bis zu 3 kW besitzen. Eine spezielle Anpassung des beschriebenen Frequenzumrichters an die elektrischen Parameter des Asynchronmotors ist nicht mehr erforderlich.

### Bezugszeichenliste

- 1 -: netzseitiger EMV-Filter
- 2 -: dreiphasiger Brückengleichrichter
- 3 -: DC/DC-Steller
- 4 -: Brems-Chopper
- 5 -: Dreiphasiger Wechselrichter
- 6 -: motorseitiger EMV-Filter
- 7 -: dreiphasiger Asynchronmotor

## Patentansprüche

1. Frequenzumrichter geeignet zur Regelung eines Asynchronmotors (7), umfassend einen eingangsseitigen ungesteuerten Brückengleichrichter (2), einen Gleichspannungszwischenkreis und einen ausgangsseitigen Wechselrichter (5), **dadurch gekennzeichnet, dass** der Gleichspannungszwischenkreis einen DC/DC-Steller (3) mit galvanischer Trennung umfasst, der eine Potentialtrennung zwischen Brückengleichrichter (2) und Wechselrichter (5) herstellt.

2. Frequenzumrichter nach Anspruch 1, **dadurch gekennzeichnet, dass** die galvanische Trennung durch einen Hochfrequenztransformator gebildet ist, der mindestens eine Primärwicklung und eine Sekundärwicklung umfasst, wobei die Sekundärwicklung vorzugsweise einen Mittelabgriff aufweist.

3. Frequenzumrichter nach Anspruch 1 oder 2, **dadurch gekennzeichnet, dass** der DC/DC-Steller (3) ein Gegentaktwandler ist.

4. Frequenzumrichter nach Anspruch 3, **dadurch gekennzeichnet, dass** der Gegentaktwandler eine Halbbrückenansteuerung umfasst.

5. Frequenzumrichter nach Anspruch 3 oder 4, **dadurch gekennzeichnet, dass** der Gegentaktwandler am Ausgang eine Mittelpunktschaltung aufweist.

6. Frequenzumrichter nach einem der Ansprüche 1 bis 5, **dadurch gekennzeichnet, dass** er im Zwischenkreis weiterhin eine Brems-Chopper-Schaltung (4) umfasst.

7. Frequenzumrichter nach einem der Ansprüche 1 bis 6, **dadurch gekennzeichnet, dass** er weiterhin einen ausgangsseitigen Sinusfilter umfasst.

8. Frequenzumrichter nach einem der Ansprüche 1 bis 7, **dadurch gekennzeichnet, dass** er weiterhin einen ausgangsseitigen du/dt-Filter umfasst.

9. Asynchronmotoreinheit, umfassend einen Asynchronmotor (7) und einen Frequenzumrichter nach einem der Ansprüche 1 bis 8.
